# EUROPÄISCHE PATENTSCHRIFT

(11) **EP 2 525 083 B1**
(45) Veröffentlichungstag und Bekanntmachung des Hinweises auf die Patenterteilung: **16.08.2017**
(21) Anmeldenummer: 12002196.9
(22) Anmeldetag: 27.03.2012
(51) Int. Cl.: F03D 7/02

(54) **Verfahren zum Betreiben einer Windenergieanlage**
Method for operating a wind turbine
Procédé de fonctionnement d'une éolienne

(30) Priorität: 18.05.2011 DE 102011101897
(43) Veröffentlichungstag der Anmeldung: 21.11.2012
(73) Patentinhaber: Nordex Energy GmbH, 22419 Hamburg (DE)
(72) Erfinder: Merkel, Maximilian, 21149 Hamburg (DE)
(74) Vertreter: Hauck Patentanwaltspartnerschaft mbB

(56) Entgegenhaltungen:
- EP-A2- 2 177 754
- DE-A1-102007 019 665
- DE-B3-102009 025 445
- US-A1- 2008 140 263
- VAN DER HOOFT E L ET AL: "Wind turbine control algorithms", ECN LITERATURE REVIEW, XX, XX, Bd. ECN-C-03-111, 1. Dezember 2003 (2003-12-01), Seiten 1-89, XP003008410,

## Beschreibung

Die vorliegende Erfindung betrifft ein Verfahren zum Betreiben einer Windenergieanlage, wobei die Windenergieanlage einen Rotor mit mindestens einem in seinem Blatteinstellwinkel verstellbaren Rotorblatt, einen mit dem Rotor verbundenen Generator zur Erzeugung elektrischer Leistung und mindestens eine Messeinrichtung zum Erfassen eines Istwerts einer für eine Drehzahl des Generators repräsentativen Größe aufweist. Zur Steuerung der Windenergieanlage ist vorgesehen, einen Sollwert für ein Generatormoment abhängig von der Drehzahl des Generators vorzugeben, wobei hierzu auf den Istwert der für die Drehzahl des Generators repräsentativen Größe zugegriffen werden kann. Ferner ist vorgesehen, den Sollwert für das Generatormoment abhängig von einer Kenngröße für eine Luftdichte zu korrigieren.

Aus EP 1 918 581 A2 ist ein Verfahren zum Betreiben einer Windenergieanlage bekannt geworden, bei dem die Umgebungstemperatur gemessen und die Ausgangsleistung der Windenergieanlage reduziert wird, wenn die gemessene Umgebungstemperatur unterhalb einer vorbestimmten Temperaturgrenze liegt. Durch dieses Verfahren soll sichergestellt werden, dass die an der Windenergieanlage bei niedrigen Temperaturen angreifenden Lasten reduziert werden.

Aus US 2008/0001409 A1 ist ein Verfahren zum Betreiben einer Windenergieanlage bekannt, bei dem durch eine selbstlernende Regelung die Steuerparameter der Windenergieanlage optimiert werden, um eine maximale Leistung zu erzielen. Die selbstlernende Regelung ist hierbei von Zustandsparametern abhängig, die beispielsweise die Windgeschwindigkeit, die Windrichtung, die Turbulenzintensität, die Temperatur, den Luftdruck oder die Zeitdauer seit dem letzten Regenfall betreffen.

Aus US 2008/0140263 A1 ist ein Verfahren zur prädiktiven Bestimmung einer Leistungskurve für die Windenergieanlage bekannt geworden. Das bekannte Verfahren berechnet eine Leistungskurve für eine Windenergieanlage, die in großer Höhe über dem Meeresspiegel aufgestellt ist. Bei dem Verfahren wird für einen festgelegten Blatteinstellwinkel die Cₚ-λ-Kurve berechnet. Nachfolgend wird aus der Cₚ-λ-Kurve eine erste Leistungskurve ohne eine Begrenzung der Leistung berechnet. Die Leistungskurve für die Windenergieanlage in großer Höhe wird dann abhängig von der Luftdichte aus der ersten Leistungskurve mit einer entsprechenden Leistungsbegrenzung berechnet.

Aus DE 100 11 393 A1 ist ein Regelungssystem für eine Windkraftanlage bekannt geworden, bei dem Messgrößen für eine standort- und witterungsabhängige Turbinenbelastung und/oder -beanspruchung erfasst werden. Eine nachgeschaltete elektronische Signalverarbeitungsanlage führt im Bereich der Nennwindgeschwindigkeit eine Leistungsreduzierung durch und schränkt diese bei hohen Windgeschwindigkeiten auf das den aktuellen Betriebsbedingungen entsprechende wirtschaftliche Optimum ein.

Aus EP 2 177 754 A2 ist ein Verfahren zum Betrieb einer Windenergieanlage bekannt, bei dem ein minimaler Blatteinstellwinkel nicht unterschritten wird.

Der Erfindung liegt die Aufgabe zugrunde, ein Verfahren zum Betreiben einer Windenergieanlage bereitzustellen, bei dem ein luftdichteabhängiger, leistungsreduzierter Betrieb korrigiert wird, um bei einem stabilen Betrieb der Windenergieanlage eine maximale Leistung zu erzielen.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Das erfindungsgemäße Verfahren ist vorgesehen und bestimmt zum Betreiben einer Windenergieanlage, wobei die Windenergieanlage einen Rotor mit mindestens einem in seinem Blatteinstellwinkel verstellbaren Rotorblatt, einen mit dem Rotor verbundenen Generator zur Erzeugung elektrischer Leistung und mindestens eine Messeinrichtung zum Erfassen eines Istwerts einer für eine Drehzahl des Generators repräsentativen Größe und eines Istwerts oder Sollwerts des Blatteinstellwinkels aufweist. Der Betrieb der Windenergieanlage erfolgt durch die Vorgabe eines Sollwerts für ein Generatormoment, abhängig von dem Istwert der Drehzahl. Ferner ist für den Betrieb der Windenergieanlage vorgesehen, den Sollwert für das Generatormoment abhängig von einer Kenngröße für die Luftdichte zu korrigieren. Insbesondere wird bei abnehmender Luftdichte der Sollwert für das Generatormoment herabgesetzt, um einen stabilen Betrieb der Windenergieanlage zu ermöglichen. Das erfindungsgemäße Verfahren weist den Verfahrensschritt auf, einen Wert des Blatteinstellwinkels zu erfassen. Bei dem Wert des Blatteinstellwinkels kann es sich um einen gemessenen Istwert oder um einen ausgelesenen Sollwert handeln. Ferner sieht das erfindungsgemäße Verfahren vor, den Sollwert für das Generatormoment zu erhöhen, wenn der erfasste Wert des Blatteinstellwinkels einen vorbestimmten Mindestwert überschreitet. Die Erhöhung des Sollwerts für das Generatormoment wird dann durchgeführt, wenn der vorgegebene Sollwert für das Generatormoment aufgrund einer Kenngröße für die Luftdichte korrigiert wurde. Der Erfindung liegt die Erkenntnis zugrunde, dass bei einem leistungsreduzierten Betrieb der Windenergieanlage aufgrund der Luftdichte die Reduktion des Sollwertes für das Generatormoment stets nur für eine bestimmte Windgeschwindigkeit vorgenommen werden soll. Wird dann die Windenergieanlage zwar bei einer geringeren Luftdichte, aber mit einer größeren Windgeschwindigkeit betrieben, so ist es möglich, den Sollwert für das Generatormoment weniger stark zu reduzieren. Es erfolgt also bei dem erfindungsgemäßen Verfahren, abhängig von der Größe des Blatteinstellwinkels, eine Korrektur des Sollwerts für das Generatormoment im leistungsreduzierten Betrieb.

Bei dem erfindungsgemäßen Verfahren erfolgt die Bestimmung eines zusätzlichen Generatormoments derart, dass eine zusätzliche Leistung der Windenergieanlage abhängig von und insbesondere proportional zu dem erfassten Wert des Blatteinstellwinkels oder zu dem gemittelten Wert des Blatteinstellwinkels ist. Die Erhöhung des Generatormoments um das zusätzliche Generatormoment erfolgt dann ausgehend von dem Sollwert für das Generatormoment im leistungsreduzierten Betrieb. In einer alternativen Ausgestaltung wird das zusätzliche Generatormoment derart bestimmt, dass das zusätzliche Generatormoment abhängig von, bevorzugt proportional zu dem erfassten Wert des Blatteinstellwinkels oder zu dem gemittelten Wert des Blatteinstellwinkels ist. Bei diesen beiden Alternativen wird entweder eine Erhöhung des Sollwerts der Leistung oder eine Erhöhung des Sollwerts für das Generatormoment vorgenommen, abhängig von, bevorzugt proportional zu dem erfassten Wert des Blatteinstellwinkels oder zu dem gemittelten Wert des Blatteinstellwinkels. Aufgrund des Zusammenhangs zwischen Leistung, Generatormoment und Drehzahl können diese Größen ineinander umgerechnet werden.

In einer bevorzugten Ausgestaltung werden die erfassten Werte für den Blatteinstellwinkel über ein Zeitintervall gemittelt. Eine Änderung des Sollwerts für das Generatormoment erfolgt also bei dem erfindungsgemäßen Verfahren dann, wenn die Werte für den Blatteinstellwinkel im zeitlichen Mittel einen Mindestwert überschritten haben. Das Zeitintervall, über das die Werte des Blatteinstellwinkels gemittelt werden, ist dabei so gewählt, dass es größer als die Zeitkonstante eines Regelkreises, insbesondere des Regelkreises für den Blatteinstellwinkel, ist.

In einer besonders bevorzugten Ausgestaltung des erfindungsgemäßen Verfahrens wird sichergestellt, dass das zusätzliche Generatormoment zusammen mit dem Sollwert für das Generatormoment im leistungsreduzierten Betrieb nicht den Wert überschreitet, der sich bei einem Normalwert für die Luftdichte ergeben würde. Dies bedeutet, dass durch das zusätzliche Generatormoment und die damit verbundene Erhöhung des Sollwerts für das Generatormoment im leistungsreduzierten Betrieb keine Sollwerte erreicht werden, die oberhalb derjenigen Sollwerte für das Generatormoment liegen, die sich bei Normalbedingungen für die Luftdichte ergeben würden. Als Normalbedingung für die Luftdichte wird beispielsweise die Luftdichte auf Meereshöhe angenommen.

In einer weiteren bevorzugten Ausgestaltung erfolgt eine Erhöhung des Sollwerts für das Generatormoment nur dann, wenn der Sollwert für das Generatormoment aufgrund einer Kenngröße für die Luftdichte korrigiert wurde. Dieser Verfahrensschritt stellt sicher, dass eine Erhöhung der Sollwerte für das Generatormoment nur dann durchgeführt wird, wenn diese zuvor aufgrund der Luftdichte korrigiert wurden.

Die Erfindung wird nachfolgend anhand eines Ausführungsbeispiels näher erläutert. Es zeigt:

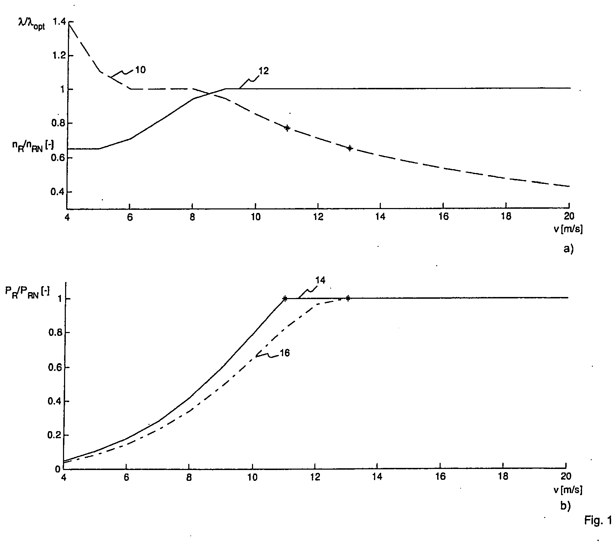

- Fig. 1 a: zwei Kurven zur Erläuterung des Zusammenhanges zwischen der Schnelllaufzahl λ, der Drehzahl des Rotors n_{R} und der Windgeschwindigkeit v,
- Fig. 1 b: zwei Kennlinien zur Erläuterung des Einflusses der Luftdichte ρ auf die Leistungskurve einer Windenergieanlage,
- Fig. 2: die Steuerkennlinie für das Generatormoment M_{G} sowie Kurven für das Rotormoment M_{R} bei unterschiedlichen Windgeschwindigkeiten v, abhängig von der Drehzahl n,
- Fig. 3: eine luftdichtekorrigierte Steuerkennlinie für das Generatormoment M_{G} sowie Kurven für das Rotormoment M_{R} bei unterschiedlichen Windgeschwindigkeiten v, abhängig von der Drehzahl n und
- Fig. 4: den Verlauf des Generatormoments M_{G} und des Blatteinstellwinkels β im leistungsreduzierten Betrieb, abhängig von der Zeit t.

Für ein besseres Verständnis der Erfindung sollen zunächst die physikalisch-technischen Grundlagen erläutert werden.

Bei dem erfindungsgemäßen Verfahren wird die Luftdichte abhängig von einer gemessenen Lufttemperatur T und einem gemessenen Luftdruck p bestimmt. Bevorzugt kann auch ein Wert für die Luftfeuchte *ψ* berücksichtigt werden. Die Werte für die Lufttemperatur und den Luftdruck werden hierbei bevorzugt direkt an der Windenergieanlage gemessen. Der Wert *ψ* für die Luftfeuchte kann abhängig von einer Tages- und/oder Jahreszeit vorgegeben werden. Bei dieser Vorgabe wird ein aus Erfahrungswerten gewonnener Wert *ψ* für die Luftfeuchte entsprechend vorgegeben. Alternativ ist es auch möglich, die Luftfeuchte *ψ* direkt zu messen.

Fig. 1 a zeigt den Verlauf 10 des Verhältnisses der Schnelllaufzahl λ, bezogen auf eine für das Rotorblatt optimale Schnelllaufzahl λₒₚₜ, abhängig von der Windgeschwindigkeit v. Der Rotor einer Windenergieanlage mit seinen beispielsweise drei Rotorblättern besitzt eine kennzeichnende Schnelllaufzahl λₒₚₜ, bei der der Leistungsbeiwert Cₚ maximal ist. Es wird daher angestrebt, die Windenergieanlage möglichst mit der optimalen Schnelllaufzahl λₒₚₜ zu betreiben. Dies wird eingeschränkt durch den zulässigen Drehzahlbereich für das Generator-Umrichtersystem der Windenergieanlage und durch die maximal zulässige Rotorblattspitzengeschwindigkeit. Praktisch kann der Rotor daher nur in einem kleinen Bereich der Windgeschwindigkeit v mit der optimalen Schnelllaufzahl λₒₚₜ betrieben werden. Die Kurve 10 in Fig. 1 a zeigt beispielhaft, dass im Bereich der Windgeschwindigkeit v von ungefähr 6 m/s bis 9 m/s der Rotor mit der optimalen Schnelllaufzahl λₒₚₜ betrieben werden kann. Bei höheren Windgeschwindigkeiten v kann die Drehzahl des Rotors n_{R} nicht weiter gesteigert werden, was zu einem Absinken der Schnelllaufzahl λ führt. In diesem Bereich ist das im Verlauf 12 in Fig. 1 a aufgetragene Verhältnis der Drehzahl des Rotors n_{R} bezogen auf die Nenndrehzahl des Rotors n_{RN} konstant und ungefähr gleich 1.

Fig. 1b zeigt den Verlauf 14 des Verhältnisses der Leistung des Rotors P_{R} bezogen auf die Nennleistung des Rotors P_{RN} bei einer Normalluftdichte ρ₀. Bei einer Normalluftdichte von ρ₀ = 1,225 kg/m³ wird die Nennleistung P_{RN} bei einer Windgeschwindigkeit v von ungefähr 11 m/s erreicht. Bei höheren Windgeschwindigkeiten v wird durch das Verstellen des Blatteinstellwinkels β die Leistung des Rotors P_{R} begrenzt. Die ebenfalls in Fig. 1b dargestellte Kennlinie 16 zeigt das Verhältnis der Leistung des Rotors P_{R} bezogen auf die Nennleistung des Rotors P_{RN} bei einer reduzierten Luftdichte ρ₁. Bei einer reduzierten Luftdichte von ρ₁ = 1,0 kg/m³ fällt die aus dem Wind aufgenommene Leistung des Rotors P_{R} ab und die Nennleistung P_{RN} wird erst bei einer Windgeschwindigkeit v von ungefähr 13 m/s erreicht. Der Vergleich mit der Kurve 10 in Fig. 1 a zeigt, dass der Rotor für Windgeschwindigkeiten v, bei denen die Nennleistung P_{RN} erreicht wurde, bereits eine Schnelllaufzahl λ aufweist, die kleiner als die optimale Schnelllaufzahl λₒₚₜ ist und dass die Schnelllaufzahl λ, bei der die Nennleistung P_{RN} erreicht wird, mit fallender Luftdichte ρ abnimmt.

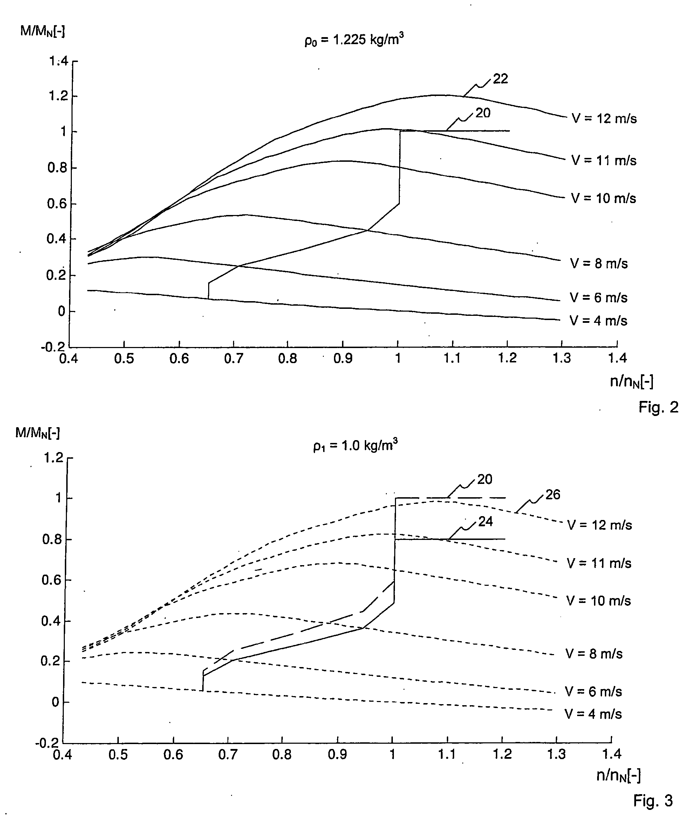

Windenergieanlagen werden in der Regel nicht abhängig von der Windgeschwindigkeit v gesteuert. Die Regelung der Generatorleistung P_{G} und damit die entsprechende Regelung des Generatormoments M_{G} erfolgt abhängig von der Rotordrehzahl n_{R}. Fig. 2 zeigt eine Steuerkennlinie 20 für das Generatormoment M_{G} abhängig von der Drehzahl n bei einer Normalluftdichte von ρ₀ = 1,225 kg/m³. Deutlich ist an der Kennlinie 20 zu erkennen, dass für die Nenndrehzahl n_{N} die Nennleistung P_{GN} des Generators erreicht wird. Fig. 2 zeigt gleichzeitig das Rotormoment M_{R}, entsprechend der Kurven 22, das bei den einzelnen angenommenen Windgeschwindigkeiten von v = 4 m/s, 6 m/s, 8 m/s, 10 m/s, 11 m/s und 12 m/s an dem Rotor wirksam wird. Der Vergleich der Steuerkennlinie 20 des Generators mit der Kurve 22, die das Rotormoment M_{R} abhängig von der Windgeschwindigkeit v zeigt, verdeutlicht, dass im Übergang der Kennlinie 20 zum Nennwert des Generatormoments M_{GN} eine Windgeschwindigkeit v von 11 m/s vorliegen muss. Aus den Kurven 22 ist ebenfalls erkennbar, dass das Rotormoment M_{R} abhängig von der Rotordrehzahl n_{R} bei konstanter Windgeschwindigkeit v jeweils ein Maximum besitzt. Wichtig für die Steuerkennlinie 20 ist dabei, dass das gemäß der Steuerkennlinie 20 eingestellte Generatormoment M_{G} sich stets rechts vom Maximum des in der Kurve 22 dargestellten Rotormoments M_{R} befindet. Hierdurch wird die Rotordrehzahl n_{R} selbstständig stabilisiert, da das Rotormoment M_{R}, bei einem Arbeitspunkt, der sich rechts vom Maximum der Kurve 22 befindet, bei fallender Rotordrehzahl zunimmt und sich somit die Drehzahl n wieder erhöht. Die Arbeitspunkte der Steuerkennlinie 20 sind somit selbststabilisierende Arbeitspunkte.

Fig. 3 zeigt eine Kennlinie 24, die einer Steuerkennlinie des Generators bei einer Luftdichte von ρ₁ = 1 kg/m³ entspricht. Deutlich ist in Fig. 3, im Vergleich zu Fig. 2, auch erkennbar, dass die Kurve 26 bei gleicher Windgeschwindigkeit v ein geringeres Rotormoment M_{R} zeigt, das aus dem Wind entnommen werden kann. Wichtig an der Kennlinie 24 ist wieder, dass die Arbeitspunkte jeweils rechts von dem Maximum der Kurve 26 liegen, so dass die Arbeitspunkte auf der Kennlinie 24 selbststabilisierend sind. Zum besseren Vergleich ist in Fig. 3 auch die Kennlinie 20 eingezeichnet, die der Kennlinie 20 aus der Fig. 2 entspricht. Hier ist zu erkennen, dass das Maximum der Kurve 26 für v = 12 m/s rechts des steilen Astes der Steuerkennlinie 20 liegt. Dies bedeutet, dass ein Arbeitspunkt im Übergang der Kennlinie zum Bereich der Nennleistung bei einer nicht luftdichtekorrigierten Kennlinie für eine Luftdichte von ρ₁ = 1 kg/m³ nicht selbststabilisierend wäre.

In Fig. 3 ist bei einem Vergleich der Kennlinien 20 und 24 ebenfalls zu erkennen, dass, bei der Nenndrehzahl n_{N}, das Nennmoment des Generators M_{GN} bei einer Luftdichte von ρ₁ = 1 kg/m³ auf ungefähr 80 % des Nennmoments M_{GN} bei einer Normalluftdichte von ρ₀ = 1,225 kg/m³ reduziert ist. Diese Reduktion des Nennmoments M_{GN} führt natürlich zu einer Reduktion der Nennleistung und des Ertrages der Windenergieanlage.

Die Erfindung sieht vor, die drehzahlabhängige Steuerkennlinie 24 der Windenergieanlage zu korrigieren. Die Korrektur erfolgt abhängig von dem Blatteinstellwinkel β.

Bei einem geringen Blatteinstellwinkel β vor Erreichen der Nenndrehzahl n_{N} ergibt sich das Generatormoment M_{G} und damit die Leistung des Generators P_{G} nur aus der luftdichtekorrigierten Steuerkennlinie 24. Wird der Blatteinstellwinkel β durch die Drehzahlregelung der Windenergieanlage erhöht, so führt dies bei gleicher Schnelllaufzahl λ zu einem geringeren Anstellwinkel der Rotorblätter, so dass auch das Generatormoment M_{G} erhöht werden kann, ohne den stabilen Bereich des Rotorkennfeldes zu verlassen. Im Einzelnen bedeutet dies, dass bei der Erfindung durch einen zusätzlichen Beitrag ΔM_{G} zum Sollwert für das Generatormoment M_{G} die Leistung P der Windenergieanlage erhöht wird. Der zusätzliche Anteil ΔM_{G} zu dem Sollwert des Generatormoments M_{G} trägt dazu bei, dass der aufgrund der Korrektur der Luftdichte ρ entstehende Ertragsverlust, zumindest bei großen Windgeschwindigkeiten v, kompensiert werden kann.

Das erfindungsgemäße Verfahren sieht dabei die folgenden Verfahrensschritte vor:
- Erfassen eines Istwerts einer für eine Drehzahl des Generators n_{G} repräsentativen Größe,
- Vorgabe eines Sollwerts für das Generatormoment M_{G} abhängig von dem erfassten Istwert der für die Drehzahl des Generators n_{G} repräsentativen Größe,
- Erfassen eines Werts für den Blatteinstellwinkel β,
- Erhöhen des Sollwerts für das Generatormoment M_{G}, wenn der erfasste Wert für den Blatteinstellwinkel β einen vorbestimmten Mindestwert βₘᵢₙ überschreitet.

Bevorzugt wird als Istwert einer für die Drehzahl des Generators repräsentativen Größe der Istwert der Drehzahl des Generators erfasst.

Zur Stabilisierung des Verfahrens kann vorgesehen sein, den erfassten Wert für den Blatteinstellwinkel β über eine vorbestimmte Zeitdauer fortlaufend zu mitteln. Bei dem Wert für den Blatteinstellwinkel kann es sich um einen gemessenen Istwert und/oder einen in der Steuerung des Blatteinstellwinkels vorliegenden Sollwert handeln.

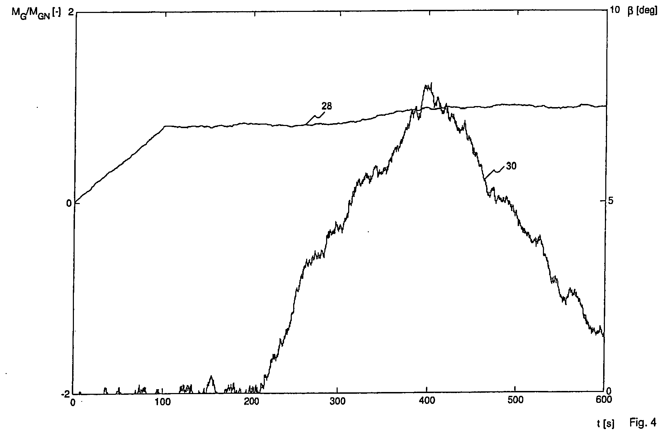

Fig. 4 zeigt beispielhaft den Verlauf 28 des Generatormoments M_{G} und den Verlauf 30 des Blatteinstellwinkels β über der Zeit t. Der Sollwert des Generatormoments M_{G} beträgt in dem leistungsreduzierten Betriebsmodus, bei einer reduzierten Luftdichte ρ₁, ungefähr 80 % des Nennwerts für das Generatormoment M_{GN} im Betrieb bei einer Normalluftdichte ρ₀. Beginnend ab einer Zeitdauer von ungefähr 200 Sekunden, setzt die Blatteinstellregelung ein und erhöht bis zu einer Zeitdauer von ungefähr 400 Sekunden den Blatteinstellwinkel β auf Werte von bis zu 8°. Aufgrund der hohen Werte für den zeitlich gemittelten Blatteinstellwinkel β wird, ungefähr beginnend ab einer Zeitdauer von 300 Sekunden, der Sollwert für das Generatormoment M_{G} erhöht. Wie in Fig. 4 dargestellt, führt dies zu einer Erhöhung des Generatormoments M_{G} entsprechend Kurve 28. Der auch in dem Zeitintervall von 300 s bis 400 s entsprechend Kurve 30 weiter steigende Blatteinstellwinkel β führt zu einem weiteren Ansteigen des Sollwerts für das Generatormoment M_{G}. Das hohe Generatortormoment M_{G} bewirkt eine Reduktion der Rotordrehzahl n_{R}, wodurch nachfolgend aufgrund der Drehzahlregelung auch der Blatteinstellwinkel β verringert wird. Dies wiederum führt zu einer Erhöhung des Rotormoments M_{R}. Zum Zeitpunkt t = 600 Sekunden hat der Blatteinstellwinkel β wieder einen niedrigen Wert von ungefähr 1° bis 2° erreicht und das resultierende Rotormoment M_{R} entspricht nun dem deutlich höheren Generatormoment M_{G} entsprechend Kurve 28. Auf diese Weise kann auch in einem luftdichtekorrigierten Betriebsmodus der Windenergieanlage zuverlässig ein höherer Ertrag erzielt werden.

## Patentansprüche

1. Verfahren zum Betreiben einer Windenergieanlage, wobei die Windenergieanlage einen Rotor mit mindestens einem in seinem Blatteinstellwinkel (β) verstellbaren Rotorblatt, einen mit dem Rotor verbundenen Generator zur Erzeugung elektrischer Leistung und mindestens eine Messeinrichtung zum Erfassen eines Istwerts einer für eine Drehzahl des Generators repräsentativen Größe aufweist, wobei ein Sollwert für ein Generatormoment (M_{G}) abhängig von einer Drehzahl (n) vorgegeben und der Sollwert für das Generatormoment (M_{G}) abhängig von einer Kenngröße für eine Luftdichte (ρ) korrigiert wird, mit folgenden Verfahrensschritten:
- Erfassen eines Istwerts einer für eine Drehzahl des Generators (n_{G}) repräsentativen Größe,
- Vorgabe eines Sollwerts für das Generatormoment (M_{G}) abhängig von dem Istwert der für die Drehzahl des Generators (n_{G}) repräsentativen Größe und Korrektur des Sollwerts für das Generatormoment (M_{G}) abhängig von einer Kenngröße für die Luftdichte (ρ),
- Erfassen eines Werts für den Blatteinstellwinkel (β) und
- Erhöhen des Sollwerts für das luftdichteabhängig korrigierte Generatormoment (M_{G}), wenn der erfasste Wert für den Blatteinstellwinkel (β) einen vorbestimmten Mindestwert (βₘᵢₙ) überschreitet, wobei ein zusätzliches Generatormoment (ΔM_{G}) derart bestimmt wird, dass eine zusätzliche Leistung (ΔP) oder ein zusätzliches Generatormoment (ΔM_{G}) der Windenergieanlage abhängig von dem erfassten oder gemittelten Wert für den Blatteinstellwinkel (β) ist, und der Sollwert für das luftdichteabhängig korrigierte Generatormoment (M_{G}) um das zusätzliche Generatormoment (ΔM_{G}) erhöht wird.

2. Verfahren nach Anspruch 1, **gekennzeichnet durch**
- Mitteln der erfassten Werte für den Blatteinstellwinkel (β) über ein vorbestimmtes Zeitintervall.

3. Verfahren nach Anspruch 1 oder 2, **dadurch gekennzeichnet, dass** das zusätzliche Generatormoment (ΔM_{G}) derart bestimmt wird, dass die zusätzliche Leistung (ΔP) proportional zu dem erfassten oder gemittelten Wert für den Blatteinstellwinkel (β) ist.

4. Verfahren nach Anspruch 1, **dadurch gekennzeichnet, dass** das zusätzliche Generatormoment (ΔM_{G}) derart bestimmt wird, dass das zusätzliche Generatormoment (ΔM_{G}) proportional zu dem erfassten oder gemittelten Wert für den Blatteinstellwinkel (β) ist.

5. Verfahren nach einem der Ansprüche 1 bis 4, **gekennzeichnet durch**
- Begrenzen des Sollwerts für das Generatormoment (M_{G}) auf einen Maximalwert, der sich bei einem Normalwert für die Luftdichte (ρ₀) ergibt.

## Claims

1. A method of operating a wind turbine, wherein the wind turbine comprises a rotor with at least one rotor blade which can be adjusted in its blade pitch angle (ß), a generator connected to the rotor for generating electric power and at least one measuring device for capturing an actual value of a variable which is representative for a rotational speed of the generator, wherein a desired value for a generator torque (M_{G}) is preset depending on a rotational speed (n) and the desired value for the generator torque (M_{G}) is corrected depending on a parameter for an air density (ρ), with the following procedural steps:
• capturing an actual value of a variable which is representative for a rotational speed of the generator (n_{G})
• setting a desired value for the generator torque (M_{G}) depending on the actual value of the variable which is representative for the rotational speed of the generator (n_{G}), and correcting the desired value for the generator torque (M_{G}) depending on a parameter for the air density (ρ)
• capturing a value for the blade pitch angle (ß) and
• increasing the desired value for the generator torque (M_{G}) which was corrected depending on the air density if the captured value for the blade pitch angle (ß) exceeds a preset minimum value (ßₘᵢₙ), wherein an additional generator torque (ΔM_{G}) is identified in such a manner that an additional power (ΔP) or an additional generator torque (ΔM_{G}) of the wind turbine depends on the captured or averaged value for the blade pitch angle (ß), and the desired value for the generator torque (M_{G}) which was corrected depending on the air density, is increased by the additional generator torque (ΔM_{G}).

2. The method according to claim 1, **characterised by**
• averaging the captured values for the blade pitch angle (ß) over a predetermined time period.

3. A method according to claim 1 or 2, **characterised in that** the additional generator torque (ΔM_{G}) is identified in such a manner that the additional power (ΔP) is proportional to the captured or averaged value for the blade pitch angle (ß).

4. The method according to claim 1, **characterised in that** the additional generator torque (ΔM_{G}) is identified in such a manner that the additional generator torque (ΔM_{G}) is proportional to the captured or averaged value for the blade pitch angle (ß).

5. A method according to any one of claims 1 to 4, **characterised by**
• limiting the desired value for the generator torque (M_{G}) to a maximum value which results at a standard value for the air density (ρ₀).

## Revendications

1. Méthode d'exploration d'une éolienne, l'éolienne comportant un rotor avec au moins une pale de rotor qui peut être ajustée dans son pas de pale (ß), un générateur accolé au rotor pour la génération d'une puissance électrique et au moins un dispositif de mesure pour saisir une valeur réelle d'une variable qui est représentative pour une vitesse de rotation du générateur, une valeur de consigne pour un couple du générateur (M_{G}) étant imposée en fonction d'une vitesse de rotation (n) et la valeur de consigne pour le couple du générateur (M_{G}) étant corrigée en fonction d'un paramètre pour une densité de l'air (ρ), avec les étapes du procédé suivantes:
• saisir une valeur réelle d'une variable qui est représentative pour une vitesse de rotation du générateur (n_{G})
• définir une valeur de consigne pour le couple du générateur (M_{G}) en fonction de la valeur réelle de la variable qui est représentative pour la vitesse de rotation du génerateur (n_{G}), et corriger la valeur de consigne pour le couple du générateur (M_{G}) en fonction d'un paramètre pour la densité de l'air (ρ)
• saisir une valeur pour le pas de pale (ß), et
• augmenter la valeur de consigne pour le couple du générateur (M_{G}) qui était corrigée en fonction de la densité de l'air quand la valeur saisie pour le pas de pale (ß) dépasse une valeur minimale prédéterminée (ßₘᵢₙ), un couple du générateur (ΔM_{G}) additionnel étant défini de telle manière qu'une puissance additionnelle (ΔP) ou un couple du générateur additionnel (ΔM_{G}) de l'éolienne dépend de la valeur pour le pas de pale (ß) saisie ou moyennée, et la valeur de consigne pour le couple du générateur (M_{G}) qui était corrigée en fonction de la densité de l'air, est augmentée par le couple du générateur additionnel (ΔM_{G}).

2. Méthode selon la revendication 1, **caractérisée par**
• moyenner les valeurs saisies pour le pas de pale (ß) pour un intervalle de temps prédéterminé.

3. Méthode selon la revendication 1 ou 2, **caractérisée en ce que** le couple du générateur (ΔM_{G}) additionnel est déterminé de telle manière que la puissance additionnelle (ΔP) est proportionnelle à la valeur saisie ou moyennée pour le pas de pale (ß).

4. Méthode selon la revendication 1, **caractérisée en ce que** le couple du générateur (ΔM_{G}) additionnel est déterminé de telle manière que le couple du générateur (ΔM_{G}) additionnel est proportionnel à la valeur saisie ou moyennée pour le pas de pale (ß).

5. Méthode selon l'une quelconque des revendications 1 à 4, **caractérisée par**
• limiter la valeur de consigne pour le couple du générateur (M_{G}) à une valeur maximale qui résulte chez une valeur normale pour la densité de l'air (ρ₀).
